# EUROPEAN PATENT SPECIFICATION

(11) **EP 3 500 774 B1**
(45) Date of publication and mention of the grant of the patent: **05.10.2022**
(21) Application number: 17844234.9
(22) Date of filing: 22.08.2017
(51) Int. Cl.: F16G 11/12, B25H 3/00

(54) **LANYARD FOR A TOOL**
KORDEL FÜR EIN WERKZEUG
LONGE À OUTIL

(30) Priority: 22.08.2016 US 201662377899 P; 13.01.2017 US 201762445849 P
(43) Date of publication of application: 26.06.2019
(60) Divisional application: 22188363.0
(73) Proprietor: Milwaukee Electric Tool Corporation, Brookfield, WI 53005 (US)
(72) Inventor: WAGNER, Andrew, G., Lisbon WI 53089 (US); ROSE, Derek, Menomonee Falls WI 53051 (US); GRAYKOWSKI, Anthony, S., Port Washington WI 53074 (US); MARCELLE, Jesse, Muskego WI 53150 (US); BECK, Travis, J., Shorewood WI 53211 (US)
(74) Representative: Barker Brettell LLP
(86) International application number: PCT/US2017/047887
(87) International publication number: WO 2018/039153

(56) References cited:
- EP-A2- 2 527 670
- CA-A1- 2 762 029
- CN-U- 202 318 159
- DE-U1-202007 006 840
- JP-A- 2012 232 403
- KR-Y1- 200 208 710
- KR-Y1- 200 208 710
- US-A- 4 765 037
- US-A- 4 765 037
- US-A1- 2006 272 890
- US-A1- 2008 009 185
- US-A1- 2008 009 185
- US-A1- 2009 056 088
- US-A1- 2009 056 088
- US-A1- 2010 147 912
- US-A1- 2011 132 944
- US-A1- 2012 267 403
- US-A1- 2012 267 403
- US-A1- 2014 201 888
- US-A1- 2014 201 888
- US-A1- 2015 164 204
- US-A1- 2016 227 911
- US-B1- 6 216 319

## Description

### CROSS REFERENCE TO RELATED APPLICATIONS

This patent application claims priority to U.S. Provisional Application Serial No. 62/377,899, filed August 22, 2016, and this patent application claims priority to U.S. Provisional Application Serial No. 62/445,849 filed on January 13, 2017.

### BACKGROUND

The invention relates to lanyards for use with tools, and more particularly to heavy duty lanyards including a tracking system.

Lanyards are sometimes used to assure that tools are not dropped or lost during use. However, present lanyards often break making them unreliable and unsuitable for larger or heavier tools. Carabiners are sometimes used to securely clip objects within an interior aperture defined by a frame of the carabiner. The interior aperture is alternatively accessible and inaccessible by virtue of a pivotal locking bar.

US2016/227911A1 discloses a tool harness that includes a closed loop, non-adjustable, buckle free main strap, wherein the ends of the main strap are fixed one to the other. The tool harness further includes a tool leader, which is attached to the main strap, and a tool strap communicating with the tool leader.

US2006/272890A1 discloses a lanyard for electronic message devices, such as cell phones, including in one embodiment a carabiner clip for attaching the cell phones to an item of clothing such as a belt loop or to a handle of a purse. In another embodiment, the lanyard is configured as a relatively long loop so as to be worn around the person's neck. The cell phone is attached to the lanyard by a quick release key ring coupler. In accordance with a first arrangement, the cell phone is connected to the lanyard by a split ring and in accordance with a second embodiment, the cell phone is connected by a looped strand.

JP2012232403A discloses a tool fall preventing cord which enables a worker to execute a work safely without dropping his work efficiency. The tool fall preventing cord, which couples the safety belt of the worker with a tool, includes the first mount, which is installed on the safety belt, the second mount, which is installed in the tool, and an expandable spiral part, which couples the first mount with the second mount. A flexible insertion member is inserted into the expandable spiral part, or a film having rubber elasticity is stretched on the surface of the expandable spiral part.

US2015/164204A1 discloses a tool lanyard wrist cuff including a fixed closed loop band and an adjustment tab extending therefrom. A second fastener part releasably engages a first fastener part when the adjustment tab is folded with a tab inside surface against a loop outside surface. A lanyard connector assembly includes a lanyard connector, a breakaway lanyard connector strap releasably connected to the closed loop band by a releasable fastener and fixedly connected at a first end to the adjustment tab or the closed loop band adjacent the adjustment tab.

CN202318159U discloses a multifunctional tool fixer, belonging to the technical field of safety of an elevation operation and an elevation low-pressure electrification operation. The multifunctional tool fixer consists of a tying belt, a head-end omnibearing rotary self-locking snap, a connection rope, a tail-end omnibearing rotary self-locking snap, a lantern ring, a binding rope and an elastic binding band. One end of the connection rope is connected with the head-end omnibearing rotary self-locking snap, the other end of the connection rope is connected with the tail-end omnibearing rotary self-locking snap, the tail-end omnibearing rotary self-locking snap is provided with the lantern ring and the binding rope, the elastic binding band is arranged on the lantern ring, and the head-end omnibearing rotary self-locking snap further can be connected with the tying belt. When the tying belt is tied on the wrist of a person, the tying belt is of a watchband structure, and when the tying belt is tied on the waist, the tying belt is of a waistband structure. The multifunctional tool fixer disclosed by the utility model can effectively avoid a danger caused when an elevation operation tool drops. The head-end omnibearing rotary self-locking snap and the tail-end omnibearing rotary self-locking snap can freely and randomly rotate, and the tool is flexibly and freely used and is not affected.

US2012/67403A discloses a device for securing a tool to the wrist of a user by a cord to prevent dropping the tool while still allowing use of the tool. The device further comprises removable means for securing the tool to the cord such that the cord may be removed from the tool, or from the wrist. The device further comprises an elastic cord to prevent injury to the wrist if the tool is dropped by minimizing shock to the wrist as the tool reaches the end of the cord length during the fall.

US2009/056088A1 discloses a carabiner comprising a fixed C-shaped body equipped with a securing part, and a gate movable around a pivoting axis between a closed position and an open position. The gate comprises a latching part and a locking ring fitted coaxially around the gate. An end head of the gate partially surrounds the securing part in the closed position, and comprises a shoulder acting as end-of-travel stop for the ring in the locked position.

US2011/132944A1 discloses a lanyard device. for dental procedures which prevents dental tools or dental debris from descending in an unrestrained manner down a patient's throat. The dental lanyard comprising a restraining strap with both a first end and a second end so that the first end may be threaded through a loop formed at the second end so as to define a restraining loop which may be affixed to the individual patient or dentist, a swivel member that may be attached to the first end of the restraining strap and a fastening means attached to the opposite end of swivel member wherein the fastening means may also secure the dental device.

US6216319B1 discloses a tool tether that includes an adjustable lanyard having a loop that fits over a user's hand that can be tightened thereon. An opposite end of the lanyard from the loop includes a swivel clasping mechanism that can be connected to one of a plurality of hardware receptacles. The hardware receptacles include an eyelet or the like to allow it to be secured to the clasping mechanism. The hardware receptacles come in a wide variety of sizes to accommodate tools and hardware of different sizes and weights. In one embodiment, the hardware receptacles are cylindrically shaped rubber cups that are rigid enough to support different tools, and have different diameters. In an alternate embodiment, the hardware receptacles are flexible ring members that can be wrapped around a particular tool or component.

US2010/147912A1 discloses apparatuses and methods for tethering devices capable of securing heavy articles. In one possible embodiment, a tethering device comprises: an extension and retraction mechanism with a non-tangling coil system portion; a first attachment mechanism coupled to a first end portion of the extension and retraction mechanism; and, a second attachment mechanism coupled to a second end portion of the extension and retraction mechanism. The tethering device is capable of bearing a substantially heavy load. The first attachment mechanism may comprise a carabiner, and the second attachment mechanism may comprise a carabiner or a clip mechanism with male and female portions. A tertiary attachment mechanism may also be provided, which provides an internal attachment in the device to prevent it from extending. In one possible method for tethering a heavy article, a first attachment mechanism is attached to a user's person is provided, with the first attachment mechanism coupled to a first end of an extension/retraction mechanism. A second attachment mechanism is attached to a heavy article, with the second attachment mechanism coupled to a second end of the extension/retraction mechanism. The extension of the extension/retraction mechanism is caused by applying a force against a coil system of the extension/retraction mechanism, and the retraction of the extension/retraction mechanism is caused by removing the force.

EP2527670A2 discloses an automatic locking carabiner including a frame, a gate, a gate biasing system, and a gate locking system. The gate is pivotably coupled to the frame including a closed configuration within which the gate and frame form a continuously enclosed inner region, and an open configuration within which the gate is pivotably rotated within the inner region so as to form an opening. The gate locking system includes an engaged state within which the gate is locked in the closed configuration, and a disengaged state within which the gate is pivotably rotatable with respect to the frame. The gate locking system is biased toward the engaged state when the gate is in the closed configuration. The functionality and operation of the gate locking system is independent of the gate biasing system. The engaged state of the gate locking system includes a releasable magnetic coupling between the gate and the frame.

KR200208710Y1 discloses preventing twisting of the connecting strap connected to the mobile phone or the hook connected by a clip to the connecting strap when carrying a mobile phone or hanging it around the neck.

DE202007006840U1 discloses a belt having at least one chamber to be filled with a medium and closable.

US2014/201888A1 discloses articles, devices, methods, and systems for securing a hat to a wearer. In certain non-limiting embodiments, it includes the use of a hat lanyard including a lower strap having a first end and a second end and a lower strap fastening mechanism that is adapted to releasably fasten the lower strap to a use's article of clothing: an upper strap comprising a first end and a second end with a first and second fastening section that are adapted to releasably attach to form a loop; and a connector strap having a first end a second end that connects the upper strap to the lower strap.

US4765037A discloses a variable-length strap for removably attaching an article, such as a pacifier, to an item of a child's clothing is provided with a clip for attachment to the child's clothing. The strap may be constructed of a stretchable and elastic material, so that the length of the strap may be elongated in response to tensile forces exerted on the strap. A means for varying the base length of the strap includes a series of mating snap members disposed along the length of the strap.

US2008/009185A1 discloses a radio frequency identification connector assembly configured and arranged for retrofittable connection comprises a device, a housing, a radio frequency identification device, and a connector. The radio frequency identification device is operatively connected to the housing, and the connector is operatively connected to the housing. The connector is configured and arranged to connect the housing to the device.

CA2762029A1 discloses a lanyard connector for the convenient suspension of badges, keys or other objects around the neck. The connector comprises a connector body having a socket for receiving a lanyard connector piece, through a ball and socket interface. The socket interface comprises a substantially circular seat opening on an external surface of the socket interface with a pair of opposite facing slots on an outer periphery of said seat opening. This allows the ball socket interface to be more secure. Various types of attachments may be used with the ball and socket interface, thus allowing flexibility in providing different options for various situations. Various attachment devices may be used with the connector piece. The lanyard connector may be made from molded plastic.

### SUMMARY

The present application provides a lanyard assembly as defined in the appended claims.

In one construction, a lanyard assembly includes a strap having a first end and a second end, a cinch coupled to the first end, and an attachment member coupled to the second end.

In another construction, a lanyard assembly includes a strap having a first end and a second end, an attachment mechanism coupled to the first end and a quick connect attachment mechanism connected to the second end. The quick connect attachment mechanism includes a swivel member and a cinch for securing a tool coupled to the swivel member. The swivel member is configured to allow rotation between the cinch and the strap and the quick connect attachment mechanism can be quickly engaged and disengaged from the strap to allow the quick connection of various tools.

In another construction, a lanyard for attachment to a hardhat with an aperture includes a strap having a first end and second end, the first end including a first clip and configured to be threaded through the aperture of the hard hat, the second end including a second clip. The first end is configured to be threaded through the first clip, the first clip including a lever configured to fix the first end with respect to the first clip.

In another construction, a lanyard assembly includes a strap having a first end and a second end, a swivel member coupled to the first end, and a cinch coupled to the swivel member, the swivel member configured to allow rotation between the cinch and the strap. The lanyard assembly further includes a carabiner coupled to the second end and including a frame with a pivot end and a locking end, an interior aperture defined by the frame, and a locking bar defining an axis and having a first end pivotally coupled to the pivot end and an opposite second end defining a recess. The locking end of the frame is configured to fit within the recess to define a mating position between the locking end of the frame and the second end of the locking bar. When the second end is in the mating position with the locking end, the locking end and the second end are prevented from moving with respect to each other along the axis.

Other aspects of the invention will become apparent by consideration of the detailed description and accompanying drawings.

### BRIEF DESCRIPTION OF THE DRAWINGS

Fig. 1 is a perspective view of a lanyard;
Fig. 2 is a perspective view of a number of color coded lanyards with the color coding indicating the weight rating of the lanyard;
Fig. 3 is a perspective view of an identification tag and a lanyard.
Fig. 4 is a perspective view of a lanyard including a quick connect feature to allow for easy tool changes.
Fig. 5 is a perspective view of a lanyard including a swivel loop or hook to allow for rotation of the carabiner.
Fig. 6 is a perspective view of a lanyard for a hard hat.
Fig. 7 is a perspective view of a carabiner.
Fig. 8 is a front view of the carabiner of Fig. 7.
Fig. 9 is another perspective view of the carabiner of Fig. 7.
Fig. 10 is another front view of the carabiner of Fig. 7 in a locked position.
Fig. 11 is another perspective view of the carabiner of Fig. 7 in a locked position.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

### DETAILED DESCRIPTION

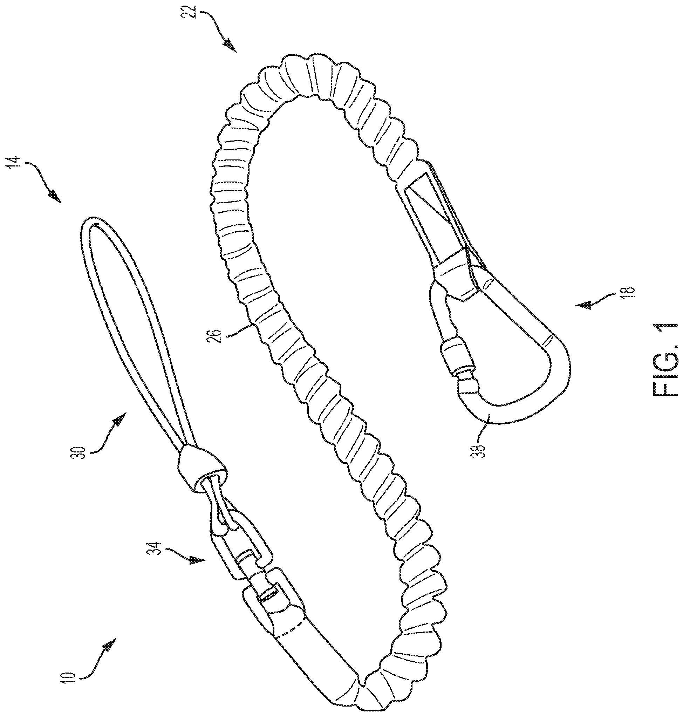

Fig. 1 illustrates a lanyard 10 having a cinch end 14, a locking end 18, and a strap 22 extending between the ends 14, 18. The strap 22 may include elastic material weaved into fabric to allow for some stretching or extension of the strap 22. The strap 22 is part of a shock absorbing body 26 that is able to stretch or expand in response to sudden tension being applied to the lanyard 10. The cinch end 14 includes a heavy duty cinch 30 arranged to attach to a tool (not shown) or other object that is to be secured to the lanyard 10. Preferably, the cinch 30 includes elastic material to allow some stretching to the cinch 30.

A swivel member 34 is positioned between the strap 22 and the cinch 30 to allow full 360 degree rotation of the tool without requiring rotation of the strap 22 or the lanyard 10. In addition, the locking end 18 preferably includes a locking carabiner 38 that facilitates attachment of the lanyard 10 to the user or to another object. Preferably, the carabiner 38 as well as the swivel member 34 are metallic and are weight rated for the particular application.

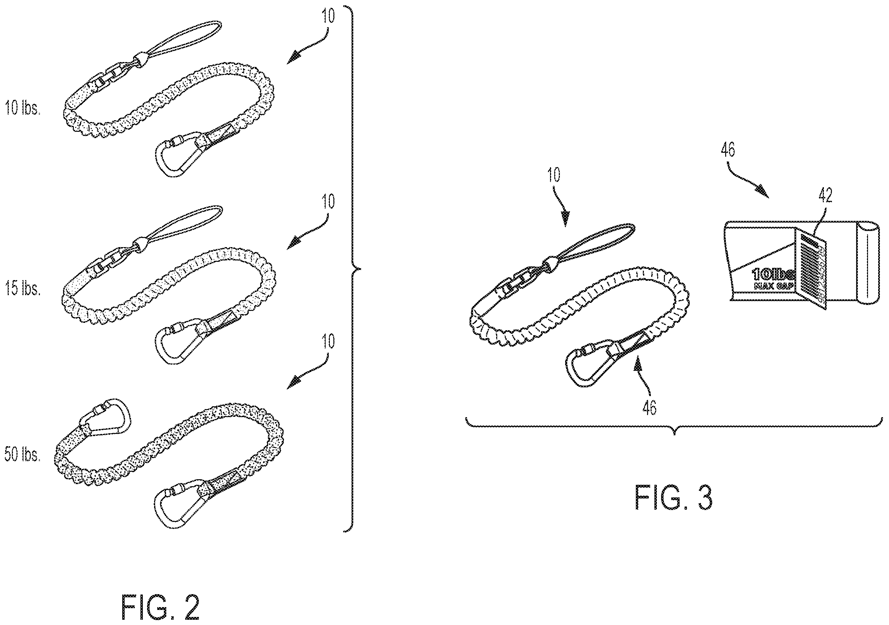

With reference to FIG. 2, the lanyards 10 can be color coded to reflect the weight rating for each of the lanyards 10 such that a user may immediately, visually recognize which lanyard is appropriate for a specific use or tool weight. For example, one arrangement may include a red strap portion indicating it is rated for up to 10 pounds while a black strap indicates a lanyard rated for up to 15 pounds. Other colors (e.g., grey for 50 pound rating) or patterns of colors (e.g., strips) could be employed to indicate other weight ratings as may be desired or required.

With reference to FIG. 3, the lanyards 10 include an identifier 42 that is part of an identification tag 46. In one embodiment, the identifier 42 is a serial number (e.g., number and/or bar code) and a date code printed on the identification tag 46 which is then sewn to the lanyard 10. In another embodiment, the identifier 42 is an RFID tag with a unique RFID which is attached to the identification tag 46 or directly to the lanyard 10.

Lanyards 10 are regularly inspected to assure that they are not damaged or worn. In addition, the date code allows for a determination of age of the lanyard 10. A tracking system (e.g., a ONE-KEY application) can be used to maintain a record of these inspections and the results. For example, a user could enter the serial numbers from the identification tag 46, or could scan the RFID tags of each of the lanyards 10 to enter them into the tracking system. Then, when a predetermined time period has elapsed, the system can notify the user, (e.g., through the ONE-KEY application) that the lanyard 10 is due to be inspected or replaced. In one embodiment, a user may walk in proximity to one or more lanyards 10, which may transmit a signal to the application (e.g., ONE-KEY) including the lanyard serial number. The tracking system (e.g., ONE-KEY application) can automatically recognize whether the lanyards 10 in the vicinity are due to be inspected or changed and inform the user. In another embodiment, the user can scan the RFID codes of each of the nearby lanyards 10 to determine whether any of the lanyards 10 are due to be inspected or replaced.

Additionally, the identification tags 46 which are sewn onto the lanyards 10 are tubular and sewn at opposing ends of the tube. This provides longer life than a single tag and prevents removal of the tag without destroying the tag.

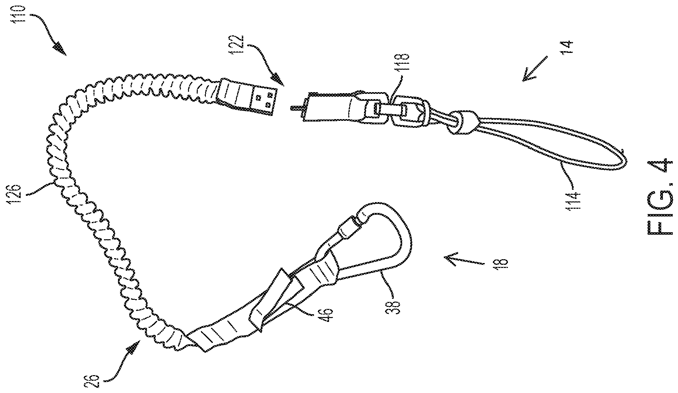

With reference to Fig. 4, another construction of a lanyard 110 is illustrated. The lanyard 110 is similar to the lanyard 10 but includes a quick change feature. The cinch end 14 of the lanyard 110 includes an elastic attachment portion 114 (e.g., a cinch 30) for attaching the lanyard 110 to a tool, a swivel member 118 that allows for 360 degree rotation of the tool with respect to the lanyard 110 and a quick change attachment mechanism 122 positioned between the swivel member 118 and the strap 22 of the lanyard 110. The quick change attachment mechanism 122 allows for the quick change of tools on a single lanyard. Thus, a user can attach a number of cinch ends 112 with quick change attachment mechanisms 122 to various tools, and then can swap out different tools onto the main lanyard portion using the quick change attachment mechanism 122 without having to detach the elastic attachment portion 114 from the tool and apply it to a new tool. Additionally, by positioning the swivel member 118 near the tool, the whole lanyard 110 doesn't get twisted when trying to rotate the tool (as it might if it were located farther away from the tool on the lanyard 110). The construction illustrated in Fig. 4 includes three separate elastic attachment portions 114 that can be quickly attached or detached from the remainder of the lanyard as desired. In other constructions, the lanyard 110 could include any number of separate elastic attachment portions 114.

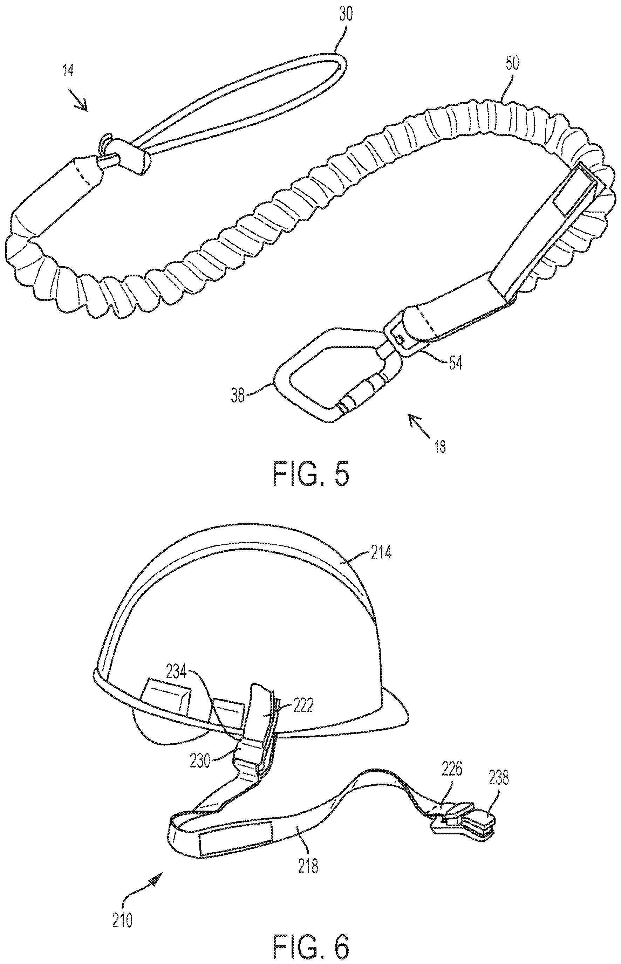

In some embodiments, the lanyard includes multiple rubber-like elastomeric strands held together in a woven sheath 50, as shown in Fig. 5. The woven sheath is attached to the carabiner by a swivel loop or hook 54 that is configured to allow 360 degree rotation of the carabiner relative to the sheath 50 and vice versa.

In some embodiments, a lanyard 210 is configured to attach to a hard hat 214 with an aperture (not shown), as shown in Fig. 6. The lanyard 210 has a strap 218 with a first end 222 and a second end 226. The first end 222 includes a first clip 230 and is configured to be threaded through the aperture of the hard hat 214, as well as through the first clip 230. The first clip 230 includes a lever 234 to fix the first end 222 with respect to the strap 218 or, alternatively, allow the first end 222 to be adjusted with respect to the strap 218. The second end 226 of the strap 218 includes a second clip 238 that can clip to, for example, a person's shirt or vest such that if the hard hat 214 falls off the person's head, it is prevented from dropping to the floor.

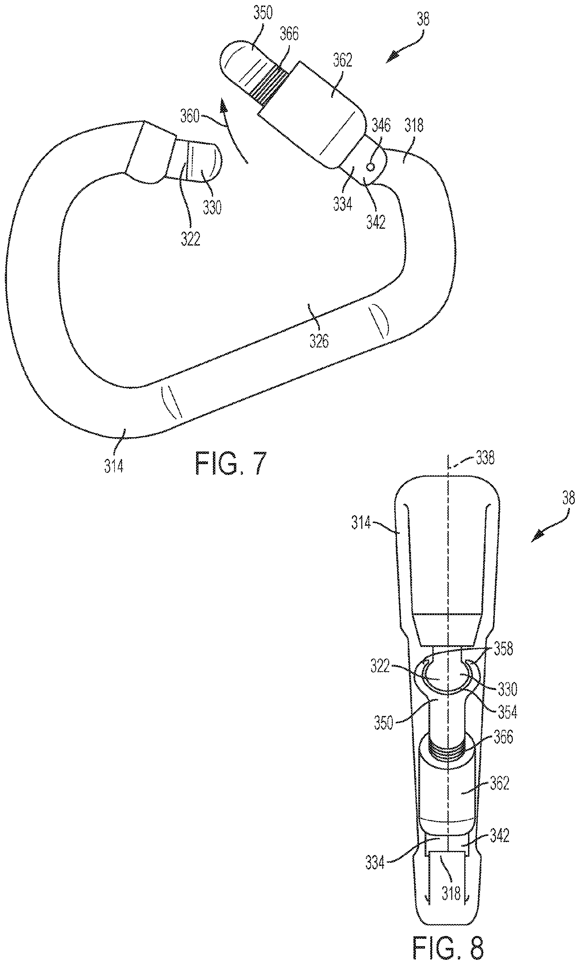

With reference to Figs. 7-11, in some embodiments the carabiner 38 includes a frame 314 with a pivot end 318 and a locking end 322. The frame 314 defines an interior aperture 326 within the carabiner 38. The locking end 322 of the frame defines, for example, a bulge 330 that has a relatively greater diameter than the portion of the frame 314 immediately adjacent the locking end 322. The carabiner 38 further includes a locking bar 334 defining an axis 338. The locking bar 334 includes a first end 342 pivotally coupled to the pivot end 318 of the frame 314 via a pivot joint 346, and a second end 350 opposite the first end 342. The locking end 322 of the frame 314 is configured to fit within a recess 354 defined by the second end 350 of the locking bar 334. The locking bar 334 is pivotal about the pivot joint 346 in a plane defined by the frame 314 of the carabiner 38.

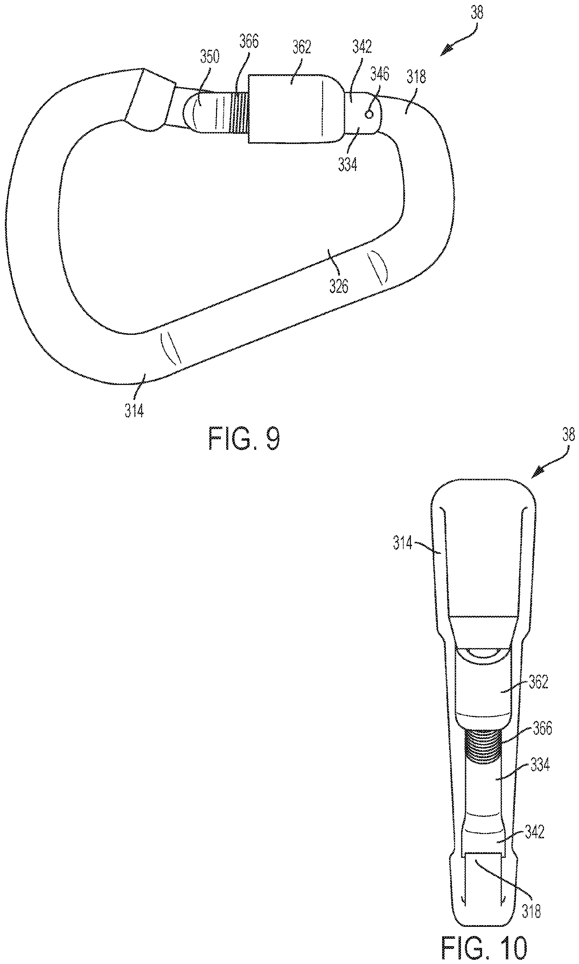

When the locking end 322 of the frame 314 is fit within the second end 350 of the locking bar 334, the carabiner 38 is in a mating position, as shown in Figs. 8 and 9. When in the mating position, access to the interior aperture 326 is blocked. A blocking portion or portions 358 of the second end 350 are arranged such that in the mating position, the second end 350 and the locking end 322 are prevented from moving with respect to each other along the axis 338. Thus, if a force is applied to the locking bar 334 or the locking end 322 in either direction along the axis 338, the locking end 322 and the second end 350 of the locking bar 334 will resist breaking. The locking bar 334 and the frame 314 may be made of, for example, 6063 aluminum. In another embodiment, the locking bar 334 and the frame 314 may be made of, for example, 6061 aluminum.

However, when in the mating position, the locking bar 334 is permitted to pivot (indicated by arrow 360) outwardly from the frame 314 and about the pivot joint 346 to separate the second end 350 of the locking bar 334 from the locking end 322 of the frame 314. In some embodiments, the locking bar 334 may be prevented from pivoting towards the interior aperture 326. Once the locking bar 334 is pivoted outwards, access to the interior aperture 326 is permitted. In other embodiments, the second end 350 of the locking bar 334 may define, for example, the bulge 30 and the locking end 322 of the frame 314 may include the blocking portion 358 and define the recess 354 configured to receive the second end 350 of the locking bar 334. In some embodiments, the locking bar 334 is biased towards the mating position by a biasing member (not shown).

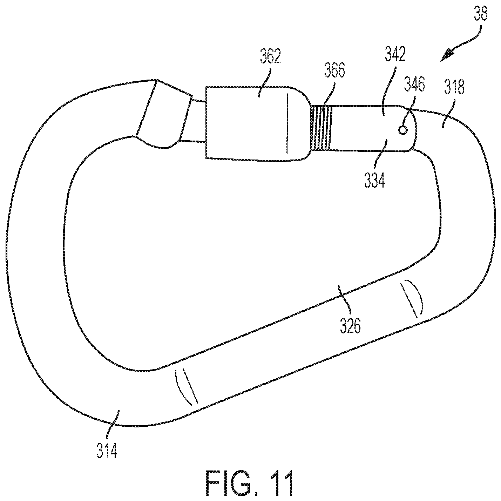

The carabiner 38 also includes a sleeve 362 coaxially arranged about the locking bar 334. The sleeve 362 may be twisted or rotated along the locking bar 334 via, for example, threads 366, to adjust the sleeve 362 relative to the locking bar 334 along the axis 338. In an unlocked position, the sleeve 362 is distant from the second end 350 of the locking bar and the locking end 322 of the frame 314, as shown in Figs. 7-9. In the unlocked position, the locking bar 334 may freely pivot about the pivot joint 346 between the mating position and a separated position, as indicated by the arrow 360 in Fig. 7. In a locked position, as shown in Figs. 10 and 11, the sleeve 362 is adjusted along the axis 338 to a position in which it surrounds the second end 350 of the locking bar 334 and/or the locking end 322 of the frame 314. In the locked position, the locking bar 334 is prevented from pivoting about the pivot joint 346, and is thus restrained in the mating position.

Various features and advantages of the invention are set forth in the following claims.

## Claims

1. A lanyard assembly comprising:
a strap (22, 218) having a first end (14, 222) and a second end (18, 226);
a cinch (30) coupled to the first end (14, 222);
an attachment member coupled to the second end (18, 226); **characterized by**
a tubular identifier (42) sewn into the strap (22, 218), the tubular identifier (42) configured for use with a tracking system that communicates when the strap (22, 218) is due to be inspected or replaced.

2. The lanyard assembly of claim 1, further comprising:
a swivel member (34, 118) coupled to the cinch (30) at the first end (14, 222) and adjacent the first end (14, 222), wherein the cinch (30) is coupled to the swivel member (34, 118), the swivel member (34, 118) permits rotation between the cinch (30) and the strap (22, 218);
wherein the attachment member is a carabiner (38) coupled to the second end (18, 226) and adjacent the second end (18, 226) of the strap (22, 218), the carabiner (38) including,
a frame (314)having a pivot end (318) and a locking end (322),
an interior aperture defined by the frame (314),
a locking bar (334) defining an axis (338) and having a first end (342) pivotally coupled to the pivot end (318) and an opposite second end (350) defining a recess (354), the locking end (322) of the frame (314) configured to fit within the recess (354) to define a mating position between the locking end (322) of the frame (314) and the second end (350) of the locking bar (334); and
wherein when the second end (350) of the locking bar (334) is in the mating position with the locking end (322), the locking end (322) and the second end (350) of the locking bar (334) are prevented from moving with respect to each other along the axis (338).

3. The lanyard assembly of claim 2, wherein the carabiner (38) is made of 6061 aluminum.

4. The lanyard assembly of claim 2, further comprising a biasing member, wherein the locking bar (334) is biased towards the mating position by the biasing member.

5. The lanyard assembly of claim 2, wherein the locking end (322) includes a bulge (30) that is received in the recess (354), and optionally or preferably wherein the recess (354) is defined by blocking portions (358) that secure the bulge (30) in the recess (354), or wherein the locking bar (334) of the carabiner (38) further includes a sliding sleeve (362) that locks and unlocks the locking bar (334) in the mating position.

6. The lanyard assembly of claim 1, further comprising:
a quick connect attachment mechanism (122) connected to the first end (14,222) of the strap (22, 218), the quick connect attachment mechanism (122) including,
a swivel member (118) wherein the cinch (30) is coupled to the swivel member (118) and configured to secure a tool, the swivel member (118) permits rotation between the cinch (30) and the strap (22,218), and
wherein the quick connect attachment mechanism (122) is engageable and disengageable from the strap (22,218).

7. The lanyard assembly of claim 6, further including a plurality of quick connect attachment mechanisms (122).

8. The lanyard assembly of claim 1 for attachment to a hardhat (214), the hardhat (214) having an aperture and a lanyard (110,210), the lanyard (110,210) comprising:
the first end (14,222) of the strap (22,218) threaded through the aperture of the hardhat (214);
the first end (14,222) of the strap (22,218) threaded through the cinch (30);
a lever (234) on the cinch (30) to fix the first end (14,222) of the strap (22,218) with respect to the cinch (30).

9. The lanyard assembly of claim 8, wherein the attachment member is configured to clip to an article of clothing of a user to prevent the hardhat (214) from dropping if the hardhat (214) falls off a head of the user.

10. The lanyard assembly of claim 6 or claim 8, wherein the identifier (42) is configured for use with the tracking system that communicates with a user.

11. The lanyard assembly of claim 1, wherein the identifier (42) is
(i) a serial number; or
(ii) a RFID tag with a unique RFID; or
(iii) configured for use with the tracking system that communicates with a user, and optionally or preferably wherein the identifier (42) is a tubular identification tag (46) sewn to the strap (22,218) at opposing ends of the tag (46).

12. The lanyard assembly of claim 1, wherein the strap (22,218) is shock absorbing and able to stretch or expand in response to tension, wherein optionally or preferably the strap (22,218) is a woven sheath (50) made out of a plurality of elastomeric filaments, and further optionally or preferably wherein the woven sheath (50) is coupled to the attachment member by a hook (54) that allows rotation of the attachment member relative to the woven sheath (50).

13. The lanyard assembly of claim 1, further including a swivel member (118) positioned between the strap (22,218) and the cinch (30) to allow rotation of the cinch (30) with respect to the strap (22,218), or further including a quick attachment mechanism (122), positioned between the strap (22,218) and the cinch (30), which allows the cinch (30) to be quickly engaged and disengaged from the strap (22,218).

14. The lanyard assembly of claim 1, wherein the attachment member is a carabiner (38), or wherein the strap (22,218) indicates to a user a weight rating of the strap (22,218).

## Patentansprüche

1. Halteriemenanordnung, umfassend:
einen Gurt (22, 218), der ein erstes Ende (14, 222) und ein zweites Ende (18, 226) aufweist;
einen Zuziehgurt (30), der mit dem ersten Ende (14, 222) gekoppelt ist;
ein Befestigungselement, das mit dem zweiten Ende (18, 226) gekoppelt ist; **gekennzeichnet durch**
eine rohrförmige Identifizierungsvorrichtung (42), die in den Gurt (22, 218) eingenäht ist, wobei die rohrförmige Identifizierungsvorrichtung (42) zur Verwendung mit einem Nachverfolgungssystem ausgelegt ist, das kommuniziert, wenn der Gurt (22, 218) zur Inspektion oder zum Austausch fällig ist.

2. Halteriemenanordnung nach Anspruch 1, ferner umfassend:
ein Schwenkelement (34, 118), das mit dem Zuziehgurt (30) an dem ersten Ende (14, 222) gekoppelt ist und an das erste Ende (14, 222) angrenzt, wobei der Zuziehgurt (30) mit dem Schwenkelement (34, 118) gekoppelt ist, wobei das Schwenkelement (34, 118) eine Drehung zwischen dem Zuziehgurt (30) und dem Gurt (22, 218) ermöglicht;
wobei das Befestigungselement ein Karabiner (38) ist, der mit dem zweiten Ende (18, 226) gekoppelt ist und an das zweite Ende (18, 226) des Gurts (22, 218) angrenzt, wobei der Karabiner (38) Folgendes umfasst
einen Rahmen (314), der ein Drehpunktende (318) und ein Verriegelungsende (322) aufweist,
eine durch den Rahmen (314) definierte interne Öffnung,
eine Verriegelungsstange (334), die eine Achse (338) definiert und ein erstes Ende (342), das drehbar mit dem Drehpunktende (318) gekoppelt ist, und ein gegenüberliegendes zweites Ende (350), das eine Vertiefung (354) definiert, aufweist, wobei das Verriegelungsende (322) des Rahmens (314) dazu ausgelegt ist, mit der Vertiefung (354) zusammenzupassen, um eine Eingriffsposition zwischen dem Verriegelungsende (322) des Rahmens (314) und dem zweiten Ende (350) der Verriegelungsstange (334) zu definieren; und
wobei, wenn das zweite Ende (350) der Verriegelungsstange (334) in der Eingriffsposition mit dem Verriegelungsende (322) ist, das Verriegelungsende (322) und das zweite Ende (350) der Verriegelungsstange (334) an einer Bewegung in Bezug aufeinander entlang der Achse (338) gehindert werden.

3. Halteriemenanordnung nach Anspruch 2, wobei der Karabiner (38) aus 6061 Aluminium besteht.

4. Halteriemenanordnung nach Anspruch 2, ferner umfassend ein Vorspannelement, wobei die Verriegelungsstange (334) hin zu der Eingriffsposition durch das Vorspannelement vorgespannt ist.

5. Halteriemenanordnung nach Anspruch 2, wobei das Verriegelungsende (322) eine Ausbuchtung (30) umfasst, die in der Vertiefung (354) aufgenommen ist, und optional oder vorzugsweise wobei die Vertiefung (354) durch Blockierabschnitte (358) definiert ist, die die Ausbuchtung (30) in der Vertiefung (354) sichern, oder wobei die Verriegelungsstange (334) des Karabiners (38) ferner eine Gleithülse (362) umfasst, die die Verriegelungsstange (334) in der Eingriffsposition verriegelt und entriegelt.

6. Halteriemenanordnung nach Anspruch 1, ferner umfassend:
einen Schnellverbindungsbefestigungsmechanismus (122), der mit dem ersten Ende (14, 222) des Gurts (22, 218) verbunden ist, wobei der Schnellverbindungsbefestigungsmechanismus (122) Folgendes umfasst
ein Schwenkelement (118), wobei der Zuziehgurt (30) mit dem Schwenkelement (118) gekoppelt und dazu ausgelegt ist, ein Werkzeug zu sichern, wobei das Schwenkelement (118) eine Drehung zwischen dem Zuziehgurt (30) und dem Gurt (22, 218) ermöglicht, und
wobei der Schnellverbindungsbefestigungsmechanismus (122) mit dem Gurt (22, 218) in Eingriff bringbar und von diesem lösbar ist.

7. Halteriemenanordnung nach Anspruch 6, ferner umfassend eine Mehrzahl von Schnellverbindungsbefestigungsmechanismen (122).

8. Halteriemenanordnung nach Anspruch 1 zur Befestigung an einem Schutzhelm (214), wobei der Schutzhelm (214) eine Öffnung und einen Halteriemen (110, 210) aufweist, wobei der Halteriemen (110, 210) Folgendes umfasst:
das erste Ende (14, 222) des Gurts (22, 218), das durch die Öffnung des Schutzhelms (214) gefädelt ist;
das erste Ende (14, 222) des Gurts (22, 218), das durch den Zuziehgurt (30) gefädelt ist;
einen Hebel (234) an dem Zuziehgurt (30), um das erste Ende (14, 222) des Gurts (22, 218) in Bezug auf den Zuziehgurt (30) zu fixieren.

9. Halteriemenanordnung nach Anspruch 8, wobei das Befestigungselement dazu ausgelegt ist, an einen Bekleidungsartikel eines Benutzers geklemmt zu werden, um ein Herabfallen des Schutzhelms (214) zu verhindern, wenn der Schutzhelm (214) von einem Kopf des Benutzers herabfällt.

10. Halteriemenanordnung nach Anspruch 6 oder Anspruch 8, wobei die Identifizierungsvorrichtung (42) zur Verwendung mit dem Nachverfolgungssystem ausgelegt ist, das mit einem Benutzer kommuniziert.

11. Halteriemenanordnung nach Anspruch 1, wobei die Identifizierungsvorrichtung (42) Folgendes ist
(i) eine Seriennummer; oder
(ii) eine RFID-Plakette mit einer eindeutigen RFID; oder
(iii) ausgelegt zur Verwendung mit dem Nachverfolgungssystem, das mit einem Benutzer kommuniziert, und
optional oder vorzugsweise wobei die Identifizierungsvorrichtung (42) eine rohrförmige Identifizierungsplakette (46) ist, die an den Gurt (22, 218) an gegenüberliegenden Enden der Plakette (46) genäht ist.

12. Halteriemenanordnung nach Anspruch 1, wobei der Gurt (22, 218) stoßdämpfend und in der Lage ist, sich in Reaktion auf Zug zu dehnen oder auszudehnen, wobei optional oder vorzugsweise der Gurt (22, 218) eine gewebte Ummantelung (50) ist, die aus einer Mehrzahl von Elastomerfasern besteht, und ferner optional oder vorzugsweise wobei die gewebte Ummantelung (50) mit dem Befestigungselement durch einen Haken (54) gekoppelt ist, der eine Drehung des Befestigungselements in Relation zu der gewebten Ummantelung (50) ermöglicht.

13. Halteriemenanordnung nach Anspruch 1, ferner umfassend ein Schwenkelement (118), das zwischen dem Gurt (22, 218) und dem Zuziehgurt (30) positioniert ist, um eine Drehung des Zuziehgurts (30) in Bezug auf den Gurt (22, 218) zu ermöglichen, oder ferner umfassend einen Schnellbefestigungsmechanismus (122), der zwischen dem Gurt (22, 218) und dem Zuziehgurt (30) positioniert ist, der ermöglicht, dass der Zuziehgurt (30) schnell mit dem Gurt (22, 218) in Eingriff gebracht und von diesem gelöst wird.

14. Halteriemenanordnung nach Anspruch 1, wobei das Befestigungselement ein Karabiner (38) ist, oder wobei der Gurt (22, 218) einem Benutzer eine Gewichtsklasse des Gurts (22, 218) anzeigt.

## Revendications

1. Ensemble longe comprenant :
une sangle (22, 218) ayant une première extrémité (14, 222) et une seconde extrémité (18, 226) ;
une attache (30) accouplée à la première extrémité (14, 222) ;
un élément de fixation accouplé à la seconde extrémité (18, 226) ; **caractérisé par**
un identifiant tubulaire (42) cousu dans la sangle (22, 218), l'identifiant tubulaire (42) étant conçu pour être utilisé avec un système de suivi qui communique le moment où la sangle (22, 218) doit être inspectée ou remplacée.

2. Ensemble longe selon la revendication 1, comprenant en outre :
un élément pivotant (34, 118) accouplé à l'attache (30) au niveau de la première extrémité (14, 222) et adjacent à la première extrémité (14, 222), l'attache (30) étant accouplée à l'élément pivotant (34, 118), l'élément pivotant (34, 118) permettant la rotation entre l'attache (30) et la sangle (22, 218) ;
l'élément de fixation étant un mousqueton (38) accouplé à la seconde extrémité (18, 226) et adjacent à la seconde extrémité (18, 226) de la sangle (22, 218), le mousqueton (38) comprenant,
un cadre (314) ayant une extrémité de pivotement (318) et une extrémité de verrouillage (322),
une ouverture intérieure définie par le cadre (314),
une barre de verrouillage (334) définissant un axe (338) et ayant une première extrémité (342) accouplée de manière pivotante à l'extrémité de pivot (318) et une seconde extrémité (350) opposée définissant un évidement (354), l'extrémité de verrouillage (322) du cadre (314) étant conçue pour s'insérer à l'intérieur de l'évidement (354) pour définir une position d'accouplement entre l'extrémité de verrouillage (322) du cadre (314) et la seconde extrémité (350) de la barre de verrouillage (334) ; et
lorsque la seconde extrémité (350) de la barre de verrouillage (334) est dans la position d'accouplement avec l'extrémité de verrouillage (322), l'extrémité de verrouillage (322) et la seconde extrémité (350) de la barre de verrouillage (334) étant empêchées de se déplacer l'une par rapport à l'autre le long de l'axe (338) .

3. Ensemble longe selon la revendication 2, le mousqueton (38) étant en aluminium 6061.

4. Ensemble longe selon la revendication 2, comprenant en outre un élément de sollicitation, la barre de verrouillage (334) étant sollicitée vers la position d'accouplement par l'élément de sollicitation.

5. Ensemble longe selon la revendication 2, l'extrémité de verrouillage (322) comprenant un renflement (30) qui est reçu dans l'évidement (354), et éventuellement ou de préférence l'évidement (354) étant défini par des parties de blocage (358) qui fixent le renflement (30) dans l'évidement (354), ou la barre de verrouillage (334) du mousqueton (38) comprenant en outre un manchon coulissant (362) qui verrouille et déverrouille la barre de verrouillage (334) dans la position d'accouplement.

6. Ensemble longe selon la revendication 1, comprenant en outre :
un mécanisme de fixation à raccord rapide (122) raccordé à la première extrémité (14, 222) de la sangle (22, 218), le mécanisme de fixation à raccord rapide (122) comprenant,
un élément pivotant (118), l'attache (30) étant accouplée à l'élément pivotant (118) et conçue pour fixer un outil, l'élément pivotant (118) permettant la rotation entre l'attache (30) et la sangle (22, 218), et
le mécanisme de fixation à raccord rapide (122) pouvant être mis en prise et hors prise avec la sangle (22, 218).

7. Ensemble longe selon la revendication 6, comprenant en outre une pluralité de mécanismes de fixation à raccord rapide (122).

8. Ensemble longe selon la revendication 1 destiné à être fixé à un casque de sécurité (214), le casque (214) ayant une ouverture et une longe (110, 210), la longe (110, 210) comprenant :
la première extrémité (14, 222) de la sangle (22, 218) enfilée à travers l'ouverture du casque de sécurité (214) ;
la première extrémité (14, 222) de la sangle (22, 218) enfilée à travers l'attache (30) ;
un levier (234) sur l'attache (30) pour fixer la première extrémité (14, 222) de la sangle (22, 218) par rapport à l'attache (30).

9. Ensemble longe selon la revendication 8, l'élément de fixation étant conçu pour s'accrocher à un article de vêtement d'un utilisateur pour empêcher le casque de sécurité (214) de tomber si le casque de sécurité (214) tombe de la tête de l'utilisateur.

10. Ensemble longe selon la revendication 6 ou la revendication 8, l'identifiant (42) étant conçu pour être utilisé avec le système de suivi qui communique avec un utilisateur.

11. Ensemble longe selon la revendication 1, l'identifiant (42) étant
(i) un numéro de série ; ou
(ii) une étiquette RFID avec un RFID unique ; ou
(iii) conçu pour être utilisé avec le système de suivi qui communique avec un utilisateur, et éventuellement ou de préférence l'identifiant (42) étant une étiquette d'identification tubulaire (46) cousue sur la sangle (22, 218) aux extrémités opposées de l'étiquette (46).

12. Ensemble longe selon la revendication 1, la sangle (22, 218) absorbant les chocs et pouvant s'étirer ou de s'étendre en réponse à la tension, éventuellement ou de préférence, la sangle (22, 218) étant une gaine tissée (50) faite d'une pluralité de filaments élastomères, et en outre, éventuellement ou de préférence, la gaine tissée (50) étant accouplée à l'élément de fixation par un crochet (54) qui permet la rotation de l'élément de fixation par rapport à la gaine tissée (50).

13. Ensemble longe selon la revendication 1, comprenant en outre un élément pivotant (118) positionné entre la sangle (22, 218) et l'attache (30) pour permettre la rotation de l'attache (30) par rapport à la sangle (22, 218), ou comprenant en outre un mécanisme de fixation rapide (122), positionné entre la sangle (22, 218) et l'attache (30), qui permet à l'attache (30) d'être rapidement mise en prise et hors prise avec la sangle (22, 218).

14. Ensemble longe selon la revendication 1, l'élément de fixation étant un mousqueton (38), ou la sangle (22, 218) indiquant à un utilisateur un poids nominal de la sangle (22, 218).
